# FASCICULE DE BREVET EUROPEEN

(11) **EP 1 264 117 B1**
(45) Date de publication et mention de la délivrance du brevet: **19.06.2013**
(21) Numéro de dépôt: 02711981.7
(22) Date de dépôt: 17.01.2002
(51) Int. Cl.: F16D 13/64, F16D 1/072

(54) **MONTAGE D'UN VOILE RADIAL SUR UN MOYEU, EN PARTICULIER POUR UN DISQUE D'EMBRAYAGE DE VEHICULE AUTOMOBILE**
MONTAGE EINER RADIALEN SCHEIBE AUF EINE NABE, INSBESONDERE FÜR EINE KUPPLUNGSSCHEIBE EINES KRAFTFAHRZEUGES
MOUNTING A RADIAL WEB ON A HUB, IN PARTICULAR FOR A MOTOR VEHICLE CLUTCH DISC

(30) Priorité: 17.01.2001 FR 0100625
(43) Date de publication de la demande: 11.12.2002
(73) Titulaire: VALEO EMBRAYAGES s.a.s., 80009 Amiens Cedex 1 (FR)
(72) Inventeur: TERNOY, Nicolas, F-80700 ROYE (FR); VRINAT, Jean-Pierre, F-80000 AMIENS (FR)
(74) Mandataire: Jeuland, Mickaël
(86) Numéro de dépôt international: PCT/FR2002/000176
(87) Numéro de publication internationale: WO 2002/057645

(56) Documents cités:
- FR-A- 2 632 695
- FR-A- 2 655 095
- FR-A- 2 756 337
- US-A- 4 376 333
- US-A- 4 416 564
- US-A- 4 792 030

## Description

L'invention concerne un procédé pour bloquer en rotation et en translation un voile radial autour d'un moyeu, ainsi qu'un ensemble ainsi réalisé qui peut être notamment utilisé dans un mécanisme d'embrayage de véhicule automobile.

D'une manière générale, un moyeu est un corps cylindrique qui peut être utilisé pour entraîner en rotation au moins une pièce autour d'un axe commun, et, dans de nombreuses applications industrielles, ladite pièce est un voile ou un flasque qui s'étend radialement par rapport au moyeu et qu'il faut fixer à ce dernier pour le bloquer en rotation et en translation.

La liaison entre le voile et le moyeu peut être assurée par soudage ou par un dispositif comprenant des cannelures par exemple. De telles solutions ne sont pas satisfaisantes tant du point de vue de leur facilité de mise en oeuvre que de leur fiabilité au niveau de la tenue mécanique, comme dans le cas du soudage par exemple, ou bien elles nécessitent un usinage complexe et donc onéreux, susceptible par ailleurs de fragiliser les pièces, comme dans le cas d'un dispositif à cannelures.

On connaît également une solution qui consiste à réaliser un voile comportant des petites dents en sailli dans son alésage, le voile est ensuite emmanché sur un moyeu réalisé dans une matière pas trop dure pour que les dents puissent imprimer une empreinte sur la partie cylindrique d'emmanchement de ce moyeu, ce qui assure un maintient axial du voile ainsi qu'une possibilité de transmettre un couple entre ces deux pièces.

Document FR 2632 695 décrit un procédé selon la preambule de la revendication 1

Une telle solution n'est pas utilisable dans le cas d'un moyeu réalisé dans une matière dure.

Un but de l'invention est d'apporter une solution à ce problème de liaison entre un moyeu et un voile radial, sachant qu'en pratique, il est quasiment impossible de réaliser un moyeu et un voile en une seule pièce.

A cet effet, l'invention propose un procédé pour bloquer en rotation et en translation un voile radial autour d'un moyeu, le voile s'étendant selon un plan sensiblement perpendiculaire à l'axe de rotation du moyeu, selon la revendication 1.

Avantageusement, le diamètre de l'alésage du voile sera le proche d'une valeur moyenne entre les deux diamètres passant par le creux et le sommet de la dent

D'une façon générale, lors de l'étape de l'emmanchement du voile sur le moyeu, les dents du moyeu repoussent la matière constituant le voile et pénètrent dans ledit voile au niveau du pourtour interne délimitant son orifice central.

Avantageusement, l'étape de réalisation du moyeu consiste en une opération de moulage d'un métal fritté ayant une dureté élevée, et en ce que l'étape de réalisation du voile consiste en une opération d'emboutissage d'une tôle en métal de dureté plus faible que celle du matériau constituant le moyeu.

D'une façon générale, au cours de l'étape de moulage du moyeu, on aménage dans le moule des empreintes périphériques en creux et en relief de façon à réaliser lesdites dents en une seule étape de moulage, sans reprise ultérieure du moyeu pour réaliser ces dents.

En particulier, le moyeu présentant une longueur axiale, on réalise des dents sur une partie au moins de cette longueur et sur une partie au moins de la circonférence du moyeu.

Selon l'invention, au cours de l'étape de moulage du moyeu, on forme également sur le moyeu une pluralité de protubérances radiales d'entraînement en rotation de l'ensemble moyeu-voile. Avantageusement on réalise les dents entre les protubérances de telle sorte que lesdites dents se présentent sous la forme de plusieurs zones régulièrement espacées angulairement formant des secteurs dentés.

Selon un autre mode de réalisation, au cours de l'étape de moulage du moyeu, on forme sur le moyeu une pluralité de protubérances radiales d'entraînement en rotation de l'ensemble moyeu-voile, ces protubérances présentant chacune un méplat bombé pour définir un cylindre coaxial au moyeu, et on réalise les dents sur lesdits méplats bombés.

L'invention concerne également un ensemble comprenant un moyeu et un voile résultant de la mise en oeuvre du procédé tel que défini précédemment.

D'une façon générale, le moyeu est en métal fritté et présente des dents en saillie à sa surface périphérique qui sont réalisées d'une pièce avec ledit moyeu, et le voile est en tôle emboutie, l'alésage étant brut de découpe par emboutissage.

A titre d'exemple, l'ensemble ainsi constitué pourra être utilisé dans un mécanisme d'embrayage de véhicule automobile, comme cela sera décrit plus loin.

D'autres caractéristiques, détails et avantages de l'invention ressortiront à la lecture de la description qui va suivre en référence aux dessins annexés, donnés à titre d'exemple et dans lesquels :
- la figure 1 est, une vue en perspective d'un ensemble comprenant un voile radial monté sur un moyeu conformément au procédé de montage selon l'invention,
- la figure 2 est une vue de face de la figure 1,
- la figure 3 est une vue en perspective du moyeu de figure 1,
- la figure 4 est une variante de réalisation de la figure 3, et
- la figure 5 est en coupe d'une partie d'un mécanisme d'embrayage de véhicule automobile comportant notamment un moyeu sur lequel est emmanché à force un voile radial conformément au procédé de montage selon l'invention.

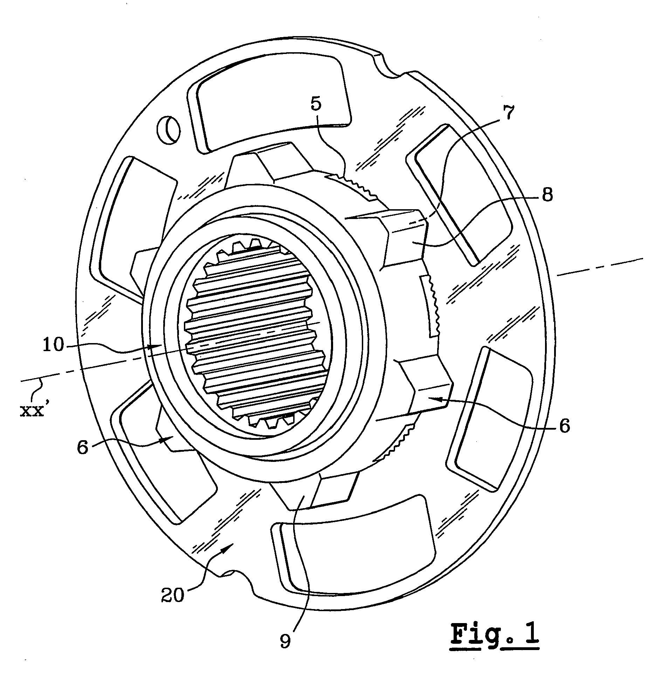

Sur la figure 1, la référence 10 désigne un moyeu d'axe de rotation xx', et la référence 20 désigne un voile radial, ou flasque, s'étendant selon un plan sensiblement perpendiculaire à l'axe xx' du moyeu et emmanché à force axialement sur celui-ci de la manière qui est décrite ci-après en relation avec les figures 1 à 4 pour le bloquer en rotation et en translation.

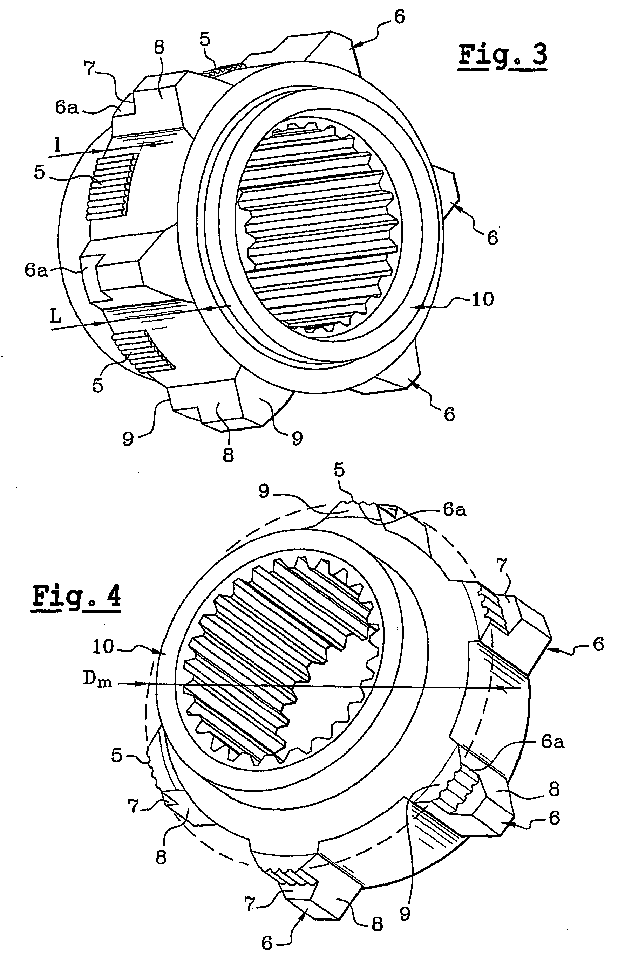

Dans un premier temps, on réalise le moyeu cylindrique 10 tel que celui représenté sur les figures 3 ou 4, par exemple par moulage d'un matériau fritté tel que du métal. Cette solution, simple à mettre en oeuvre, permet d'obtenir un moyeu 10 d'une dureté très élevée.

Pour cela, on aménage dans un moule (non représenté) des empreintes en creux et en relief permettant d'obtenir des dents 5 en saillie à la surface périphérique du moyeu 10 (figures 3 et 4). Ces dents 5 s'étendent sur une partie I au moins de la longueur axiale L du moyeu 10 d'une part, et sur une partie au moins de la circonférence du moyeu 10 d'autre part. Elles ont une hauteur de préférence comprise entre quelques dixièmes de millimètres et quelques millimètres environ.

Dans l'exemple illustré par les figures 1 à 3, les dents 5 sont avantageusement réparties sur plusieurs zones régulièrement espacées angulairement formant des secteurs dentés entre lesquels des protubérances 6 font saillie à la surface périphérique du moyeu 10. Les protubérances 6 constituent des moyens qui peuvent assurer l'entraînement en rotation de l'ensemble moyeu-voile une fois ce dernier monté sur le moyeu 10, dans le cas où l'entraînement par les dents 5 n'est pas suffisant. Le moyeu 10 présente un diamètre Dm mesuré à mi-hauteur des dents 5.

Les protubérances 6 sont venues de moulage avec le reste du moyeu 10, en une seule étape et sans reprise de la pièce après démoulage (pas d'usinage par exemple). Elles sont ici au nombre de six et sont réparties angulairement de manière régulière à la périphérie du moyeu 10.

Comme on peut le voir sur les figures 1 à 4, chaque protubérance 6 présente en section droite, selon un plan perpendiculaire à l'axe xx' du moyeu 10, une forme globalement trapézoïdale définissant deux pans latéraux inclinés 8 d'entraînement en rotation de l'ensemble moyeu-voile, deux pans frontaux opposés 9 dans l'un desquels on forme un méplat 6a en arc de cercle qui délimitent un épaulement 7 faisant office de butée axiale pour ledit voile 20. Toutes les méplats bombés 6a des protubérances 6 définissent un cylindre coaxial au moyeu 10, comme cela est représenté en traits pointillés sur la figure 4.

Dans la variante de la réalisation illustrée par la figure 4, on réalise les dents 5 directement sur les méplats bombés 6a de chaque protubérance 6 du moyeu 10, ces dents 5 s'étendant axialement sur toute la longueur des méplats 6a. Dans ce cas, le diamètre Dm est mesuré au niveau des méplats 6a, et sensiblement à mi-hauteur des dents 5. Les protubérances 6 peuvent servir à l'entraînement d'un autre voile, avec par exemple un jeu angulaire entre ces deux pièces.

On réalise également un voile 20, par exemple par une technique classique d'emboutissage de tôle en métal de dureté plus faible que celle du matériau constituant le moyeu 10. On réalise le voile 20 sous la forme d'un anneau ayant un orifice central dont le diamètre interne Df est sensiblement égal au diamètre externe Dm du moyeu 10 tel que défini précédemment. Bien entendu, le voile 20 présente au niveau du pourtour 21 de son orifice central des découpes qui s'ajustent aux protubérances radiales 6 du moyeu 10. Par ailleurs, les protubérances 6 assurent le centrage du voile 20 sur le moyeu 10.

Une fois le moyeu 10 et le voile radial 20 réalisés séparément selon les deux techniques décrites précédemment, on emmanche axialement à force le voile 20 sur le moyeu 10 de telle sorte que les dents 5 du moyeu 10 viennent s'incruster dans la matière constituant le voile 20, au niveau du pourtour 21 délimitant l'orifice dudit voile 20.

Cette incrustation des dents 5 s'accompagne, soit d'une pénétration radiale des sommets des dents 5 à l'intérieur de la matière constituant le voile 20, en déformant alors cette matière principalement radialement, soit par arrachement et repoussage axial de la matière du pourtour 21 délimitant l'orifice du voile 20, soit une combinaison des deux.

Dans les différents cas envisagés, cette incrustation des dents 5 du moyeu 10 à l'intérieur de la matière constituant le voile 20 crée un motif sensiblement dentelé au niveau du pourtour 21 délimitant l'orifice du voile 20, ce qui permet un bon blocage en rotation et en translation du voile sur le moyeu.

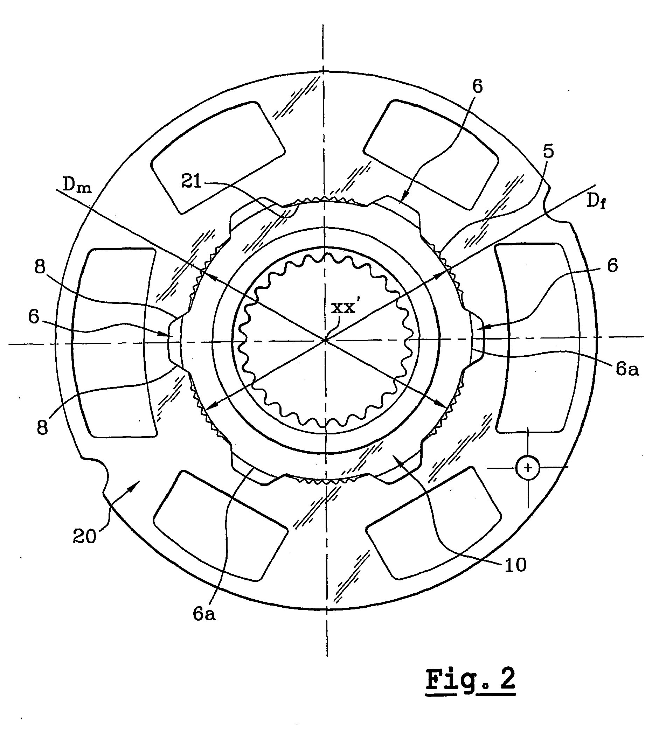

Le résultat de cet emmanchement à force est visible notamment sur les figures 1 et 2. Les dents 5 du moyeu 10 ou des protubérances 6 s'incrustent sur quelques dixièmes de millimètres dans la matière constituant le voile 20. Cette incrustation pouvant s'avérer insuffisante pour la transmission de couples relativement élevés entre le moyeu 10 et le voile 20, la présence des protubérances radiales 6 permet de pallier cette insuffisance et d'assurer une meilleure tenue mécanique lorsque l'ensemble moyeu-voile est entraîné en rotation

Les protubérances 6 servent également de butée axiale pour le voile 20 grâce à l'épaulement 7, ce qui permet un centrage précis du voile 20. Toutes autres formes de butée axiale peuvent être réalisées, notamment une forme cylindrique continue positionnée en arrière des dents 5.

Les tolérances de fabrication du moyeu 10 et du voile 20, principalement au niveau de l'orifice central de ce dernier, doivent être relativement précises pour une bonne fixation des pièces entre elles, mais cela ne pose en général pas de problème majeur dès lors que la technique de moulage de métal fritté est bien maîtrisée, et que l'emboutissage de la tôle du flasque est simplifié à l'extrême, aucun profil dentelé n'étant à prévoir au niveau de l'orifice central du voile 20.

La différence de dureté entre le métal fritté du moyeu 10 et la tôle du voile 20 évite tout arrachement de matière ou toute déformation des dents 5 du moyeu 10, et elle rend ce procédé d'emmanchement axial à force, avec ou sans arrachement de la matière constituant le voile, simple à mettre en oeuvre et très fiable en terme de tenue mécanique.

Dans l'exemple illustré, le moyeu 10 est annulaire et son orifice central est cannelé pour entraîner ou être entraîné en rotation par un arbre également cannelé monté axialement dans l'orifice central du moyeu 10.

En variante, ces cannelures internes de liaison entre le moyeu 10 et l'arbre peuvent avoir une extrémité taillée en pointe en forme de « V » du côté où l'arbre est introduit. De cette manière, l'alignement des cannelures de l'arbre lors de l'introduction est facilité par cette forme qui oriente l'arbre lors de l'interpénétration des cannelures. Cette forme est facile à réaliser sur un moyeu obtenu par moulage de poudre frittée.

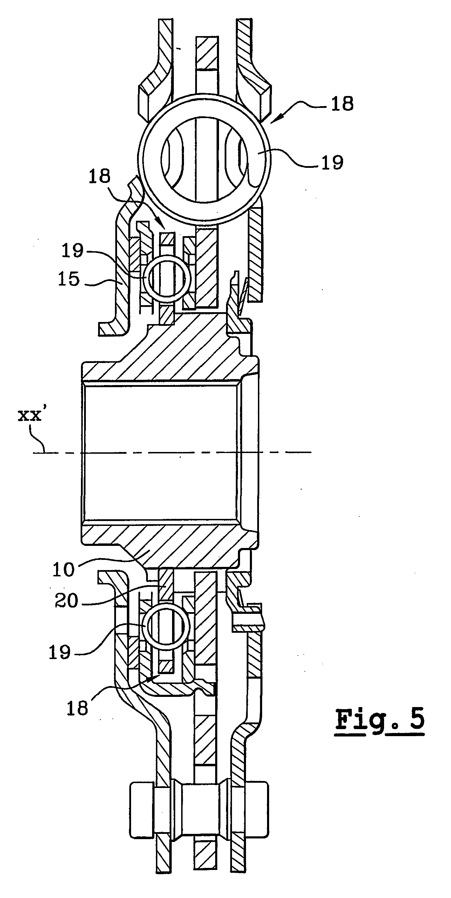

Une application particulière de ce procédé de liaison d'un voile sur un moyeu est illustrée par la figure 5 qui représente une partie d'un embrayage classique de véhicule automobile.

Sur cette figure 5, on voit en particulier un moyeu 10 du type de l'un de ceux décrits sur les figures 3 ou 4. Ce moyeu 10 peut tourner autour d'un axe principal de rotation xx' et faire office d'organe de sortie d'un mécanisme d'embrayage pour être lié par exemple à un arbre d'entrée d'une boîte de vitesses via les cannelures internes de son orifice central. Un voile 20, tel que décrit précédemment, est emmanché à force axialement sur ce moyeu 10 selon le procédé expliqué ci-avant. Ce voile 20 entraîne le moyeu 10 en rotation par l'intermédiaire d'un flasque 15 d'entrée porteur d'un disque de friction (non représenté), un ou plusieurs dispositifs d'amortissement 18 des vibrations en torsion à organes élastiques 19 à action circonférentielle pouvant être montés entre le flasque d'entrée 15 et le voile 20.

Il doit être bien entendu toutefois que cet exemple n'est donné uniquement qu'à titre d'illustration de l'objet de l'Invention dont il ne constitue en aucune manière une limitation.

Ainsi, bien que l'application ait été décrite dans le cadre d'un mécanisme d'embrayage de véhicule, le procédé de liaison trouve son application dans de nombreux autres domaines, partout où il est nécessaire de bloquer en rotation et en translation un voile radial sur un moyeu.

## Revendications

1. Procédé pour bloquer en rotation et en translation un voile radial (20) autour d'un moyeu (10), le voile (20) s'étendant selon un plan sensiblement perpendiculaire à l'axe de rotation (xx') du moyeu (10), consistant à :
- réaliser d'une part un moyeu cylindrique (10) avec des dents en (5) saillie à la surface périphérique du moyeu,
- réaliser d'autre part un voile (20) dans un matériau ayant une dureté moins élevée que celle du moyeu (10), le voile radial (20) présentant un orifice central de diamètre interne compris entre le diamètre passant par le creux des dents (5) et celui passant par le sommet des dents,
- l'étape de réalisation du moyeu (10) consistant en une opération de moulage d'un métal ayant une dureté élevée, **caractérisé en ce que**
- l'étape de réalisation du moyeu (10) consiste en outre à réaliser le moulage d'un métal fritté,
- le voile (20) est emmanché axialement et à force sur le moyeu (10) de telle sorte que les dents (5) dudit moyeu (10) s'incrustent à l'intérieur de la matière constituant le voile (20), au niveau de son orifice central, afin de bloquer en rotation et en translation le voile (20) sur le moyeu (10),
- l'étape de réalisation du voile (20) consiste en une opération d'emboutissage d'une tôle en métal de dureté plus faible que celle du matériau constituant le moyeu (10), et en que
- au cours de l'étape de moulage du moyeu (10), on forme également sur le moyeu (10) une pluralité de protubérances radiales d'entraînement en rotation de l'ensemble moyeu-voile.

2. Procédé selon la revendication 1, **caractérisé en ce que** l'orifice central du voile (20) a un diamètre interne proche d'un diamètre moyen entre le diamètre passant par le creux des dents (5) et celui passant par le sommet des dents.

3. Procédé selon la revendication 1 ou 2, **caractérisé en ce que**, lors de l'étape de l'emmanchement du voile (20) sur le moyeu (10), les dents (5) du moyeu (10) repoussent la matière constituant le voile (20) et pénètrent dans ledit voile (20) au niveau du pourtour interne (21) délimitant son orifice central.

4. Procédé selon la revendication 1, **caractérisé en ce qu'**au cours de l'étape de moulage du moyeu (10), on aménage dans le moule des empreintes périphériques en creux et en relief de façon à réaliser lesdites dents (5) en une seule étape de moulage, sans reprise ultérieure du moyeu (10) pour réaliser ces dents.

5. Procédé selon l'une quelconque des revendications précédentes, **caractérisé en ce que**, le moyeu (10) présentant une longueur axiale (L), on réalise des dents (5) sur une partie au moins de cette longueur (L) et sur une partie au moins de la circonférence du moyeu (10).

6. Procédé selon l'une quelconque des revendications précédentes **caractérisé en ce que** le moyeu (10) comporte une butée axiale pour le voile (20).

7. Procédé selon l'une quelconque des revendications 1 à 6, **caractérisé en ce qu'**au cours de l'étape de moulage du moyeu (10), on réalise les dents (5) entre les protubérances (6) de telle sorte que lesdites dents (5) se présentent sous la forme de plusieurs zones régulièrement espacées angulairement formant des secteurs dentés.

8. Procédé selon l'une quelconque des revendications 1 à 6, **caractérisé en ce qu'**au cours de l'étape de moulage du moyeu (10), on réalise les protubérances (6) présentant chacune un méplat bombé (6a) pour définir un cylindre coaxial au moyeu (10), et on réalise les dents (5) sur lesdits méplats bombés (6a).

9. Ensemble comprenant un moyeu (10) présentant un axe xx' et un voile radial (20) s'étendant selon un plan sensiblement perpendiculaire à l'axe du moyeu (10), ledit voile (20) présentant un orifice central et étant emmanché à force axialement sur le moyeu (10) pour être bloqué en rotation et en translation par rapport audit moyeu (10), **caractérisé en ce que** cet ensemble est réalisé à l'aide du procédé tel que défini par l'une quelconque des revendications précédentes,
- le moyeu (10) est en métal fritté et présente des dents (5) en saillie à sa surface périphérique qui sont réalisées d'une pièce avec ledit moyeu (10), et
- le voile (20) est en tôle emboutie, et **en ce que**
- le moyeu (10) est muni d'une pluralité de protubérances radiales (6) d'entraînement en rotation de l'ensemble.

10. Ensemble selon la revendication 9, **caractérisé en ce que** les dents (5) sont disposées entre les protubérances (6) de telle sorte que lesdites dents (5) se présentent sous la forme de plusieurs zones régulièrement espacées angulairement formant des secteurs dentés.

11. Ensemble selon la revendication 9, **caractérisé en ce que** les protubérances présentent chacune un méplat bombé (6a) pour définir un cylindre coaxial au moyeu (10), et les méplats bombés (6a) portent lesdites dents (5).

12. Ensemble selon l'une quelconque des revendications 9 à 11, **caractérisé en ce qu'**il est utilisé dans un mécanisme d'embrayage de véhicule automobile.

## Patentansprüche

1. Verfahren zum Blockieren einer radialen Flanschscheibe (20) um eine Nabe (10) herum gegen Verdrehung und gegen Verschiebung, wobei sich die Flanschscheibe (20) entlang einer zur Drehachse (xx') der Nabe (10) in etwa senkrechten Ebene erstreckt, darin bestehend:
- einerseits eine zylindrische Nabe (10) mit an der Umfangsfläche der Nabe vorstehenden Zähnen (5) auszuführen;
- andererseits eine Flanschscheibe (20) aus einem Werkstoff auszuführen, der eine weniger hohe Härte als der Werkstoff der Nabe (10) besitzt, wobei die radiale Flanschscheibe (20) eine mittige Öffnung mit einem Innendurchmesser aufweist, der zwischen dem durch den Zahnfuß der Zähne (5) verlaufenden Durchmesser und dem durch den Zahnkopf der Zähne verlaufenden Durchmesser liegt,
- wobei der Vorgang zur Ausführung der Nabe (10) aus einem Arbeitsgang zum Formen eines Metalls mit hoher Härte besteht, **dadurch gekennzeichnet, dass**
- der Vorgang zur Ausführung der Nabe (10) weiterhin darin besteht, das Formen von einem Sintermetall auszuführen,
- die Flanschscheibe (20) axial und fest an der Nabe (10) eingepasst wird, so dass sich die Zähne (5) der besagten Nabe (10) im Innern des Werkstoffs, aus dem die Flanschscheibe (20) besteht, in Höhe ihrer mittigen Öffnung einpressen, um die Flanschscheibe (20) auf der Nabe (10) gegen Verdrehung und gegen Verschiebung zu blockieren,
- der Vorgang zur Ausführung der Flanschscheibe (20) aus einem Arbeitsgang zum Tiefziehen eines Metallblechs mit einer Härte besteht, die weniger hoch ist, als die des Werkstoffs, aus dem die Nabe (10) besteht, und dadurch, dass
- im Verlauf des Vorgangs zum Formen der Nabe (10) außerdem an der Nabe (10) eine Mehrzahl von radialen Vorsprüngen zur rotatorischen Mitnahme der Baueinheit aus Nabe und Flanschscheibe ausgeformt wird.

2. Verfahren nach Anspruch 1, **dadurch gekennzeichnet, dass** die mittige Öffnung der Flanschscheibe (20) einen Innendurchmesser nahe einem mittleren Durchmesser zwischen dem durch den Zahnfuß der Zähne (5) verlaufenden Durchmesser und dem durch den Zahnkopf der Zähne verlaufenden Durchmesser hat.

3. Verfahren nach Anspruch 1 oder 2, **dadurch gekennzeichnet, dass** beim Vorgang zum Einpassen der Flanschscheibe (20) an der Nabe (10) die Zähne (5) der Nabe (10) den Werkstoff, aus dem die Flanschscheibe (20) besteht, zurückdrücken und in die besagte Flanschscheibe (20) in Höhe des ihre mittige Öffnung begrenzenden inneren Umfangs (21) eindringen.

4. Verfahren nach Anspruch 1, **dadurch gekennzeichnet, dass** im Verlauf des Vorgangs zum Formen der Nabe (10) im Formwerkzeug vertiefte und erhabene Umfangsaufnahmen angeordnet werden, um die besagten Zähne (5) in einem einzigen Formvorgang, ohne spätere Nachbearbeitung der Nabe (10) zur Ausführung dieser Zähne, auszuführen.

5. Verfahren nach einem der vorangehenden Ansprüche, **dadurch gekennzeichnet, dass**, insoweit die Nabe (10) eine axiale Länge (L) aufweist, Zähne (5) wenigstens auf einem Teil dieser Länge (L) und wenigstens auf einem Teil des Umfangs der Nabe (10) ausgeführt werden.

6. Verfahren nach einem der vorangehenden Ansprüche, **dadurch gekennzeichnet, dass** die Nabe (10) einen axialen Anschlag für die Flanschscheibe (20) aufweist.

7. Verfahren nach einem der Ansprüche 1 bis 6, **dadurch gekennzeichnet, dass** im Verlauf des Vorgangs zum Formen der Nabe (10) die Zähne (5) zwischen den Vorsprüngen (6) ausgeführt werden, so dass die besagten Zähne (5) in Form von mehreren winklig gleichmäßig verteilten Bereichen vorliegen, die gezahnte Segmente bilden.

8. Verfahren nach einem der Ansprüche 1 bis 6, **dadurch gekennzeichnet, dass** im Verlauf des Vorgangs zum Formen der Nabe (10) die Vorsprünge (6) jeweils eine gewölbte Abflachung (6a) aufweisend ausgeführt werden, um einen mit der Nabe (10) koaxialen Zylinder zu definieren, wobei die Zähne (5) an den besagten gewölbten Abflachungen (6a) ausgeführt werden.

9. Baueinheit, umfassend eine Nabe (10), die eine Achse (xx') aufweist, und eine radiale Flanschscheibe (20), die sich entlang einer zur Achse der Nabe (10) in etwa senkrechten Ebene erstreckt, wobei die besagte Flanschscheibe (20) eine mittige Öffnung aufweist und axial fest an der Nabe (10) eingepasst ist, um gegen Verdrehung und gegen Verschiebung im Verhältnis zu der besagten Nabe (10) blockiert zu sein, **dadurch gekennzeichnet, dass** diese Baueinheit anhand des Verfahrens ausgeführt ist, das durch einen der vorangehenden Ansprüche definiert ist,
- die Nabe (10) aus Sintermetall besteht und an ihrer Umfangsfläche vorstehende Zähne (5) aufweist, die einstückig mit der besagten Nabe (10) ausgeführt sind, und
- die Flanschscheibe (20) aus tiefgezogenem Blech besteht, und dadurch, dass
- die Nabe (10) mit einer Mehrzahl von radialen Vorsprüngen (6) zur rotatorischen Mitnahme der Baueinheit versehen ist.

10. Baueinheit nach Anspruch 9, **dadurch gekennzeichnet, dass** die Zähne (5) so zwischen den Vorsprüngen (6) angeordnet sind, dass die besagten Zähne (5) in Form von mehreren gleichmäßig winklig beabstandeten Bereichen vorliegen, die gezahnte Segmente bilden.

11. Baueinheit nach Anspruch 9, **dadurch gekennzeichnet, dass** die Vorsprünge jeweils eine gewölbte Abflachung (6a) aufweisen, um einen mit der Nabe (10) koaxialen Zylinder zu bilden, wobei die gewölbten Abflachungen (6a) die besagten Zähne (5) tragen.

12. Baueinheit nach einem der Ansprüche 9 bis 11, **dadurch gekennzeichnet, dass** sie in einem Kupplungsmechanismus für Kraftfahrzeuge verwendet wird.

## Claims

1. Method for locking in rotation and in translation a radial web (20) around a hub (10), the web (20) extending in a plane substantially perpendicular to the axis of rotation (xx') of the hub (10), consisting of:
- on the one hand making a cylindrical hub (10) with teeth (5) projecting at the peripheral surface of the hub,
- on the other hand making a web (20) from material having a lower hardness than that of the hub (10), the radial web (20) having a central orifice with an internal diameter between the diameter passing through the gullet of the teeth (5) and that passing through the top of the teeth,
- the step of making the hub (10) consisting of moulding a metal with high hardness, **characterised in that**
- the step of making the hub (10) further consists of moulding a sintered metal,
- the web (20) is axially force-fitted around the hub (10) in such a way that the teeth (5) of said hub (10) are embedded inside the material constituting the web (20), at its central orifice, so as to lock the web (20) in rotation and in translation around the hub (10),
- the step of making the web (20) consists of pressing a sheet metal of lower hardness than that of the material forming the hub (10), and **in that**
- during the step of making the hub (10), a plurality of radial protuberances for rotating the hub-web assembly is also formed on the hub (10).

2. Method according to claim 1, **characterised in that** the central orifice of the web (20) has an inner diameter approximating to a mean diameter between the diameter passing through the gullet of the teeth (5) and that passing through the top of the teeth

3. Method according to claim 1 or 2, **characterised in that**, during the step of fitting the web (20) around the hub (10), the teeth (5) of the hub (10) push the material constituting the web (20) and penetrate into said web (20) at the inner periphery (21) delimiting its central orifice.

4. Method according to claim 1, **characterised in that** during the moulding step of the hub (10), recessed and raised peripheral impressions are provided in the mould in order to make said teeth (5) in one moulding step, without subsequent reworking of the hub (10) to produce these teeth.

5. Method according to any one of the preceding claims, **characterised in that**, the hub (10) having an axial length (L), teeth (5) are made on at least part of the length (L) and on a part with a circumference at least that of the hub (10).

6. Method according to any one of the preceding claims **characterised in that** the hub (10) has an axial abutment for the web (20).

7. Method according to any one of claims 1 to 6, **characterised in that** during the step of moulding the hub (10), teeth (5) are also made between the protuberances (6) such that said teeth (5) are in the form of a plurality of regularly spaced zones angularly forming toothed sectors.

8. Method according to any one of claims 1 to 6, **characterised in that** during the step of moulding the hub (10), radial protuberances (6) are made, each having a convex plane (6a) to define a cylinder coaxial with the hub (10), and the teeth (5) are made on said convex planes (6a).

9. Assembly comprising a hub (10) having an axis xx' and a radial web (20) extending in a plane substantially perpendicular to the axis of the hub (10), said web (20) having a central orifice and being axially force-fitted around the hub (10) so as to be locked in rotation and in translation relative to said hub (10), **characterised in that** this assembly is produced using the method as defined by any one of the preceding claims,
- the hub (10) is made of a sintered metal and has teeth (5) projecting at its peripheral surface which are made in one piece with the said hub (10), and
- the web (20) is made of pressed sheet metal, and **in that**
- the hub (10) is provided with a plurality of radial protuberances (6) for driving the assembly in rotation.

10. Assembly according to claim 9, **characterised in that** the teeth (5) are arranged between the protuberances (6) such that said teeth (5) are in the form of a plurality of regularly spaced zones angularly forming toothed sectors.

11. Assembly according to claim 9, **characterised in that** the protuberances each have a convex plane (6a) so as to define a cylinder coaxial with the hub (10), and the convex planes (6a) carry the said teeth (5).

12. Assembly according to any one of Claims 9 to 11, **characterised in that** it is used in a motor vehicle clutch mechanism.
